# EUROPEAN PATENT SPECIFICATION

(11) **EP 1 922 508 B1**
(45) Date of publication and mention of the grant of the patent: **28.10.2009**
(21) Application number: 06779961.9
(22) Date of filing: 09.08.2006
(51) Int. Cl.: F16L 33/32, F16L 19/06

(54) **DEVICE FOR CONNECTING FLEXIBLE HOSES**
VORRICHTUNG ZUR VERBINDUNG FLEXIBLER SCHLÄUCHE
DISPOSITIF PERMETTANT DE CONNECTER DES TUYAUX SOUPLES

(30) Priority: 08.09.2005 IT RN20050057
(43) Date of publication of application: 21.05.2008
(73) Proprietor: BUCCHI S.R.L., 48022 Lugo (RA) (IT)
(72) Inventor: BUCCHI, Domenico, I-48022 Lugo (Ravenna) (IT)
(74) Representative: Paolizzi, Marco
(86) International application number: PCT/IB2006/002201
(87) International publication number: WO 2007/029068

(56) References cited:
- BE-A- 645 243
- DE-C- 687 767
- DE-C- 819 435
- GB-A- 1 494 323
- GB-A- 2 017 246
- US-A- 2 467 520
- US-A- 3 700 268
- US-A- 4 627 644

## Description

### Technical Field

This invention relates to a device for connecting flexible hoses.

In particular, this invention is applicable to the field of flexible hoses for conveying fluids.

### Background Art

As is known, there are specific standards and regulations that specify the dimensions and tolerances of the inside diameters of flexible hoses available on the market. There are, however, no such standards or regulations to specify hose outside diameters, whose dimensions and tolerances are at manufacturers' discretion and depend on the material used to make the hose and on the performance required of it. Thus, the wall thickness of different hoses with the same inside diameter usually varies between 2 mm and 6mm according to the maximum operating pressure of the hose. The wall thickness determines the size of the outside diameter.

Further, the outside surface of the hose is hardly ever smooth but is reinforced with polymer or metal coil or mesh, making it irregular. A known device for connecting flexible hoses is shown for example in document US 4627644.

To enable hoses with different outside diameters to be connected, prior art devices comprise a hollow cylindrical element, known as hose adapter, whose nominal diameter is slightly greater than the inside diameter of the hose. The adapter is pressed into one end of the hose and secured in place by a metal clamp placed around the end of the hose and tightened. The metal clamp can accommodate hoses with different outside diameters. The outside surface of the adapter usually has annular barb features that penetrate the hose and provide a watertight seal and, in conjunction with the clamp, a mechanical seal, too.

The disadvantage of these prior art devices is that they cannot withstand high pressure which causes the hose to slip off the adapter and breaks the end of the hose itself.

Moreover, since the adapter has to be pressed hard into the hose in order to guarantee a good seal, fitting and removal are not very practical.

Quick connect fittings for garden hoses with specific outside diameters are also known but these will not accept larger diameters without breaking. These quick-connect fittings, like the devices with the clamps, grip the inside of the hose and have tooth-like features that are tightened on the hose with the aid of a ring nut that performs the same function as the clamp.

Flexible hoses can also be connected to each other by sealing which is, however, an expensive method used only in industry and which, obviously, do not allow the two hose ends to be separated again.

The Applicant has found that the devices of the type described above can be improved in several respects, especially as regards the tightness of their grip on the flexible hose.

### Disclosure of the Invention

This invention therefore has for an aim to propose a device for connecting flexible hoses that will accept flexible hoses with different outside diameters and can guarantee a tight grip that withstands high pressure.

Another aim of the invention is to provide a flexible hose connecting device that can be fitted and/or removed quickly and easily.

These and other aims, which will become more apparent in the description which follows, are achieved by a flexible hose connecting device comprising the characteristics defined in claim 1 and in the claims dependent thereon.

### Brief Description of the Drawings

Other technical characteristics and advantages will become more apparent from the detailed description of a preferred non-restricting embodiment of a device for connecting flexible hoses according to the present invention.

The description is set out below with reference to the accompanying drawings which are provided solely for purposes of illustration without restricting the scope of the invention and in which:
Figure 1 is a partial longitudinal section illustrating a device for connecting flexible hoses in a first operating configuration;
Figure 2 shows the device of Figure 1 in a second operating configuration;
Figure 3 shows the device of Figure 1 in a third operating configuration;
Figure 4 shows a first alternative embodiment of the device in the second operating configuration of Figure 2;
Figure 5 shows the device of Figure 4 in the third operating configuration of Figure 3;
Figure 6 shows a second alternative embodiment of the device in the second operating configuration of Figure 2;
Figure 7 shows the device of Figure 6 in the third operating configuration of Figure 3;
Figure 8 shows a third alternative embodiment of the device according to the invention in the second operating configuration of Figure 2;
Figure 8a shows an enlarged detail from Figure 8;
Figure 8b shows another embodiment of the detail of Figure 8a;
Figure 9 shows the device of Figure 8 in the third operating configuration of Figure 3;
Figure 9a shows an enlarged detail from Figure 9; and
Figure 9b shows another embodiment of the detail of Figure 9a.

### Detailed Description of the Preferred Embodiments of the Invention

With reference to the accompanying drawings, the numeral 1 denotes in its entirety a device, for connecting flexible hoses "T".

Specifically, the device 1 is used for connecting flexible hoses "T", for example, hoses made of rubber or polyurethane for conveying fluids under pressure. Preferably, but not exclusively, the device 1 is applicable to flexible hoses "T" made of plasticized PVC with polyester mesh reinforcing, rigid shockproof PVC reinforcing or with reinforcing of plain and harmonic steel or of a vulcanized polyethylene material such as Santoprene^{®} thermoplastic rubber.

The device 1 comprises a connecting member 2 that delimits an internal conduit 3. The conduit 3 extends along a longitudinal axis "X" between a first end 2a and a second end 2b of the connecting member 2.

The connecting member 2 comprises a radially internal tubular element 4 that can be inserted into an end T₁ of a flexible hose T and a radially external threaded cylindrical member 5. The radially internal tubular element 4 terminates at the first end 2a of the connecting member 2 that is designed to accommodate the flexible hose "T", while the radially external threaded cylindrical member 5 coaxially surrounds the tubular element 4 and is radially spaced from the latter.

The threaded cylindrical member 5 extends for only a part of the length of the tubular element 4, starting from an annular connecting portion 6 that joins the threaded cylindrical member 5 to the tubular element 4 itself.

The tubular element 4 has an outside diameter "d₁" that is substantially equal to the nominal inside diameter "D₁" of the hose "T" which the device 1 has to be coupled with and a smooth outside surface 4a, free of protrusions or other features so that the tubular element 4 can be inserted easily into the hose "T".

The tubular element 4 and the radially external threaded cylindrical member 5 together delimit an annular seat 7 designed to accommodate the end T₁ of the tubular element 4. The annular seat 7 opens onto the first end 2a of the connecting member 2 and is delimited by an inside surface 5a of the threaded cylindrical member 5, by the outside surface 4a of the tubular element 4 and by an end surface 8 that lies in a plane transversal to the longitudinal axis "X" and forms part of the annular connecting portion 6.

In the preferred but non-limiting embodiments illustrated, the second end 2b of the connecting member 2, opposite the first end 2a, terminates with a threaded portion 9 that enables connection to another component such as, for example, a tap, a shutoff valve, a nozzle or another hose that differs in diameter. Depending on requirements, however, the second end 2b might have different shapes from the one illustrated.

Advantageously, the annular seat 7 has a radial thickness "s", given by the difference between the inside diameter "d₂" of the threaded cylindrical member 5 and the outside diameter "d_{1"} of the tubular element 4 and equal to the maximum thickness "S" of the flexible hoses "T" with nominal inside diameter "D₁" equal to the outside diameter "d₁" of the tubular element 4. The radial thickness "s" of the annular seat 7 is preferably between 1.5mm and 10mm. This enables the device 1 to accept flexible hoses "T" of different sizes, all having a predetermined nominal inside diameter "D₁" but different outside diameters "D₂" according, for example, to the material each hose "T" is made of and/or the pressure it is designed to withstand.

The device 1 also comprises a ring nut 10 through which the hose "T" is made to pass and which can be screwed onto the threaded cylindrical member 5. Specifically, as shown in the accompanying drawings, the ring nut 10 has an internal thread 10a that couples with an external thread 5b made on a diametrically external surface of the threaded cylindrical member 5. The ring nut 10 has a cylindrical portion 11 having the internal thread 10a and an end portion 12, preferably tapered, terminating with an opening 13 whose diameter is greater than or equal to the inside diameter "d₂" of the threaded cylindrical member 5. The end portion 12 has an inside working surface 14 that converges towards the opening 13 and terminates preferably at the opening 13.

The ring nut 10 houses a split bush 15 consisting, as is known, of a ring with a slit in it to give it elastic properties enabling it to reduce its diameter when subjected to an external force tending to move its opposite ends closer together.

The split bush 15 is positioned around both the radially internal tubular element 4 and the hose "T" when the latter is fitted over the tubular element 4 itself and has a working surface 16 that can engage the working surface 14 of the ring nut 10.

Looking in more detail, an inside portion of the split bush 15 can be engaged with the hose "T" and advantageously has barbed teeth 17 designed to hold the hose "T" in place. The working surface 16 of the bush 15 is a truncated cone shaped outside surface that lies on and slides against the inside working surface 14, also shaped like a truncated cone, of the ring nut 10.

By turning the ring nut 10, the split bush 15 can be moved between a position where it is axially spaced from the threaded cylindrical member 5 and a position where it is axially close to the threaded cylindrical member 5.

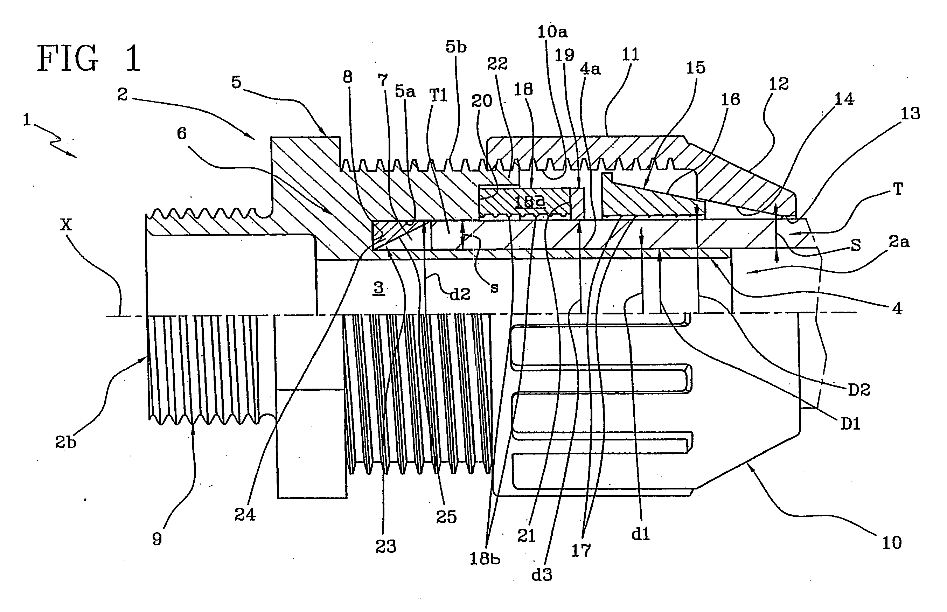

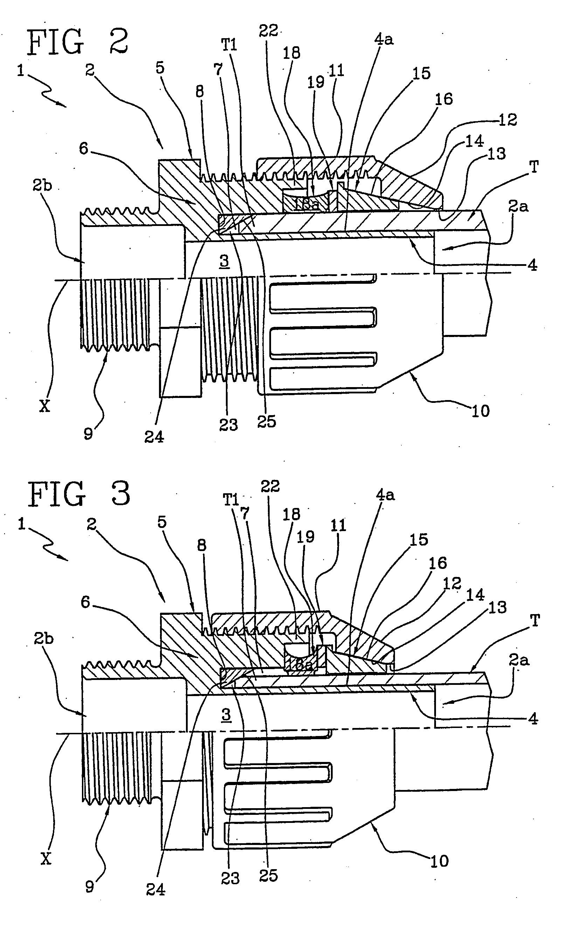

More specifically, as shown by comparing Figures 1 and 2, when the ring nut 10 is screwed onto the threaded cylindrical member 5 and moves closer to the member 5 itself, the inside working surface 14 of the ring nut 10 first slides over the outside truncated cone shaped surface 16 of the bush 15 producing a radial force acting on the surface 16 in such a way that the barbed teeth 17 of the bush 15 grip the hose "T", whatever the outside diameter "D₂" of the hose "T" is. Once the bush 15 is firmly attached to the hose "T", its inside working surface 14 pushes it axially causing the bush 15 to move a little way towards the threaded cylindrical member 5. The tubular element 4 inserted into the hose "T" prevents the later from being squeezed out of shape by the tightening action of the split bush 15.

The device 1 also comprises a seal 18 placed around the tubular element 4 and axially interposed between the threaded cylindrical member 5 and the split bush 15. The split bush 15, the seal 18 and the tubular element 4 together delimit an annular passage for inserting the end "T₁" of the flexible hose "T" into the annular seat 7.

Moreover, advantageously, in the position where the ring nut 10 and the bush 15 are axially close to the threaded cylindrical member 5, the seal 18 is pushed by the split bush 15 to adopt a radially inwardly deformed condition such as to tighten it around the flexible hose "T", thereby guaranteeing a secure sealed connection between the device 1 and the hose "T". The tightness of the seal 18 is also provided by a plurality of annular barbs 18b located on a radially inside portion of the seal 18 itself designed to come into contact with the hose "T".

To distribute the thrust exerted by the bush 15 evenly on the seal 18 and to prevent the seal 18 from being forced into the slit in the bush 15, there is a seal packing ring 19 between the bush 15 and the seal 18 itself. The seal packing ring 19 is preferably rigid and has an inside diameter "d₃" that is substantially the same as the outside diameter "D₂" of the hose "T" which coincides with the inside diameter "d₂" of the threaded cylindrical member 5. The seal packing ring 19 and the split bush 15 engage each other in a plane perpendicular to the longitudinal axis "X".

The seal 18 is attached to the threaded cylindrical member 5 preferably by co-moulding. Similarly, the seal packing ring 19 is attached to the seal 18 preferably by co-moulding.

The threaded cylindrical member 5 has an annular engagement portion 20 which the seal 18 is joined to or abuts against. The seal packing ring 19 has an annular engagement portion 21 which the seal 18 is joined to or abuts against. The seal packing ring 19 is placed around the tubular element 4; the split bush, 15, the seal packing ring 19 and the seal 18 delimiting, with the tubular element 4, an annular passage for inserting the end T₁ of the flexible hose T into the annular seat. The split bush 15 thus acts suitably on the seal packing ring 19 which deforms the seal 18.

In the embodiment illustrated in Figures 1, 2 and 3, the annular engagement portion 20 of the threaded cylindrical member 5 and the annular engagement portion 21 of the ring 19 lie in planes perpendicular to the longitudinal axis "X" of the device 1 and are thus defined by respective circular crown surfaces.

When the split bush 15 is in the axially spaced position away from the threaded cylindrical member 5 (Figure 1), the seal 18 is not subjected to any axial load and is not deformed. In the non-deformed state, the seal 18 illustrated in Figures 1, 2 and 3 is a solid defined by the volume between two straight cylindrical surfaces coaxial with the axis "X" and whose base is defined by a circular crown. This solid comprises a radial section 18a. The radial section 18a is substantially rectangular (Figure 1). Further, the non-deformed state shown in Figure 1, the seal 18 may even be radially spaced from the hose "T" to enable the latter to be easily inserted into the seat 7.

The axial compression of the seal 18 by the bush 15 causes the section 18a to bend towards the longitudinal axis "X" and to tighten around the hose T". The smaller the outside diameter "D₂" of the hose "T", the more the seal 18 is deformed, as may be observed by comparing Figures 2 and 3.

To prevent the section 18a from bending in the opposite direction, away from the hose "T", the threaded cylindrical member 5 has a protrusion 22 coaxial with the seal 18. The protrusion 22 extends around the seal 18 and thus creates a stop that prevents the seal 18 from bellying away from the hose "T". Alternatively, in an embodiment that is not illustrated, the seal 18 has a predeformed shape curving towards the longitudinal axis "X". For example, the section 18a of the seal 18, even when no load is applied to it, is curved towards the longitudinal axis "X".

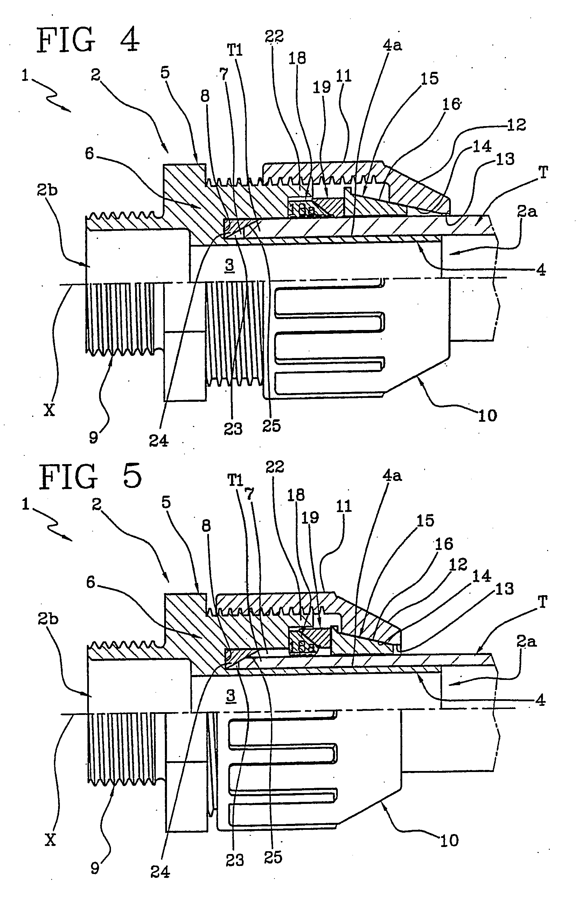

Figures 4 and 5 show a first alternative embodiment of the device 1, where the annular engagement portions 21 of the ring 19 has the shape of a truncated cone converging towards the longitudinal axis "X" of the device 1, starting from the seal 18 towards the split bush 15. The section 18a of the seal 18 thus has a trapezoidal shape whose oblique side is associated with the inclined side of the ring 19. In fact the seal 18 is shaped to match the truncated cone of the annular engagement portion 21 of the ring 19. The annular engagement portion 20 of the threaded cylindrical member 5 has the same shape it has in the embodiment illustrated in Figures 1, 2 and 3.

The convergence of the annular engagement portion 21 of the ring 19 facilitates the inward thrusting and deformation action of the seal 18 when the bush 15 is in the close-up position.

If the hose "T" has an outside diameter "D₂" equal to the maximum diameter that can be accepted by the device 1, the seal is deformed to the minimum extent (Figure 4). If, on the other hand, the outside diameter "D₂" of the hose "T" is smaller than the maximum diameter that can be accepted by the device 1 (Figure 5), the seal is deformed to a larger extent and ensures a tight grip on the hose "T".

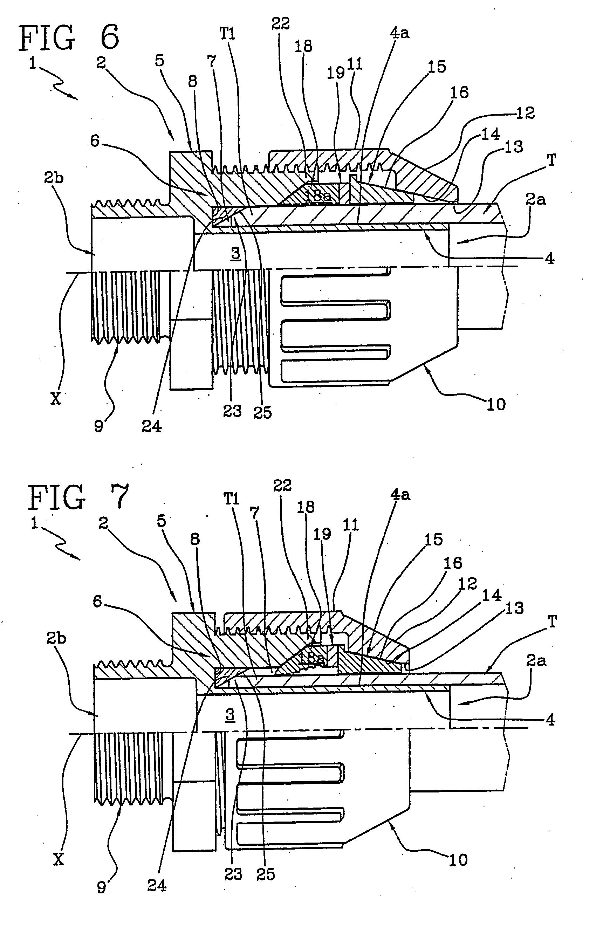

In the second alternative embodiment shown in Figures 6 and 7, the annular engagement portion 21 of the ring 19 is the same as that in the embodiment illustrated in Figures 1, 2 and 3, while the annular engagement portion 20 of the threaded cylindrical member 5 has the shape of a truncated cone that converges towards the longitudinal "X" of the device 1, away from the split bush 15 and towards the threaded cylindrical member 5. The section 18a of the seal 18 thus has a trapezoidal shape whose oblique side is associated with the inclined side of the threaded cylindrical member 5. In fact, the seal 18 is shaped to match the truncated cone of the annular engagement portion 20 of the threaded cylindrical member 5.

In the same way as in the first alternative embodiment, the convergence of the annular engagement portion 20 of the threaded cylindrical member 5 makes it possible to push and deform the seal 18 inwards when the bush 15 is in the close-up position. If the hose "T" has an outside diameter "D₂" equal to the maximum diameter that can be accepted by the device 1, the seal 18 is deformed to the minimum extent (Figure 6). If, on the other hand, the outside diameter "D₂" of the hose "T" is smaller than the maximum diameter that can be accepted by the device 1 (Figure 7), the seal is deformed to a larger extent and ensures a tight grip on the hose "T".

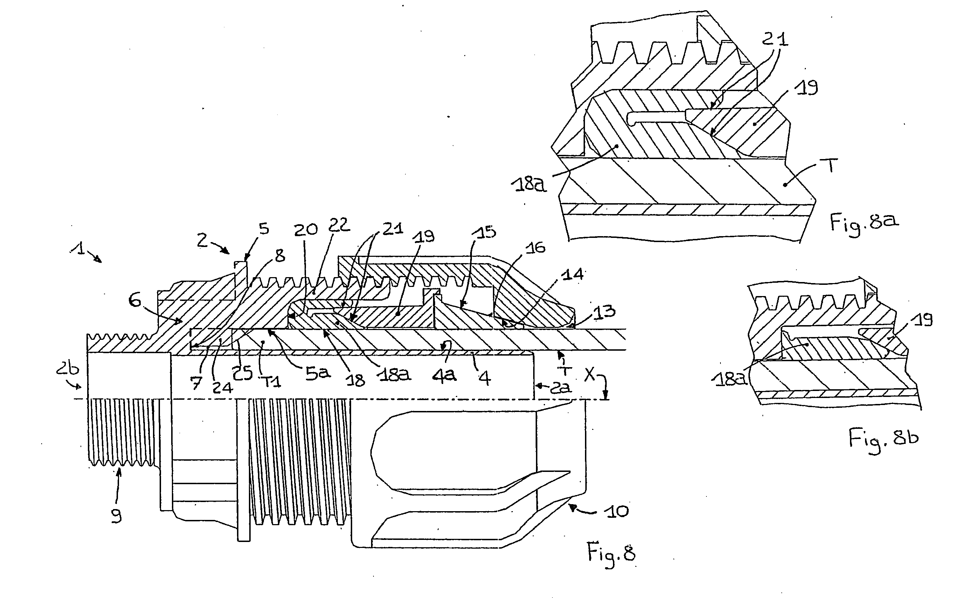

In a third configuration, according to the invention illustrated in Figure 8 the seal 18 is shaped to partially accommodate the ring 19. The section 18a of the seal 18 is thus shaped like the letter "C". This section 18a consists of two elements connected by a transversal element positioned in a substantially radial direction. When the seal 18 is not subjected to any load, the two elements are substantially parallel while the outside of the transversal element abuts against the annular engagement portion 20 of the threaded cylindrical member 5. The ring 19 is generated by revolving about the axis "X" a surface that does not intersect the axis "X" itself and that has a wedge-shaped radial section, the ring 19 exerting an inward radial thrust and an outward radial thrust on the seal 18.

The contact surfaces 21 between the ring 19 and the seal 18 define, in a radial section, converging lines whose extensions preferably intersect with the longitudinal axis "X".

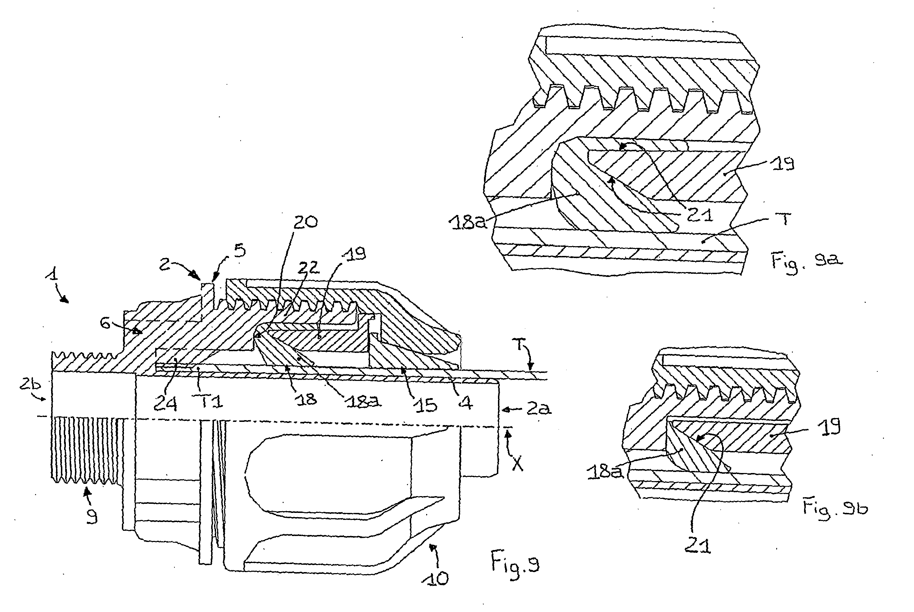

If the hose "T" has an outside diameter "D₂" equal to the maximum diameter that can be accepted by the device 1, the seal is deformed to the minimum extent (Figure 8). If, on the other hand, the outside diameter "D₂" of the hose "T" is smaller than the maximum diameter that can be accepted by the device 1 (Figure 9), the seal is deformed to a larger extent and ensures a tight grip on the hose "T".

The embodiments according to the invention illustrated in Figures 8b and 9b are variants of those illustrated in Figures 8a and 9a, respectively, and have the seal 18 co-moulded with the threaded cylindrical member 5. The seal 18 in these variants advantageously consists of a mere appendage which, when acted upon by the ring 19, guarantees a tight fit over the hose T.

To further improve the watertight seal and make it more independent of the mechanical grip so as to facilitate application on the hose "T", the device 1 also comprises spacer means 23 located in the annular seat 7 and used to keep the end "T₁" of the hose "T" spaced from the end surface 8 of the annular seat 7 when the split bush 15 is axially away from the threaded cylindrical member 5, that is to say, before screwing on the ring nut 10.

Thus, when the ring nut 10 is screwed on, the split bush 15 closes around the hose "T", clamping it with its teeth 17 and driving it towards the end surface 8 of the seat 7. If the hose "T" were already in contact with the end surface 8, this movement would not be possible and would limit the radial movement of the bush 15 and the deformation of the seal 18, which would reduce the effectiveness of the seal provided by the device 1. The spacer means 23 are therefore designed to stop the hose "T" when the tubular element 4 is manually inserted (Figure 1) but, thanks to the force applied when the ring nut 10 is screwed on, they permit a slight deformation of the end "T₁" of the hose "T" in such a way that it can move further into the seat 7 once the split bush 15 has securely gripped the hose "T" (Figures 2 and 3).

The spacer means 23 preferably comprise a plurality of tabs 24, only one of which is visible in the accompanying drawings, having engagement portions 25 that converge on the longitudinal axis "X" of the device 1 towards the end surface 8. Each of the tabs 24 extends in a respective radial plane containing the longitudinal axis "X" of the device 1 and may have a shape, for example triangular or trapezoidal, extending between the end surface 8 of the annular seat 7 and the inside surface 5a of the threaded cylindrical member 5. Advantageously, one side of the tab 24 converges on the longitudinal axis "X" towards the split bush 15 so as to facilitate the insertion and deformation of the hose T, as explained in more detail below.

As illustrated, for example in Figures 1 to 7, each tab 24 has the shape of a right-angled triangle with the short sides associated with the walls and the hypotenuse extending between the inside surface 5a of the threaded, cylindrical member 5 and the corner delimited by the end surface 8 and the outside surface 4a of the tubular element 4, so as to define one of the engagement portions 25. In Figures 8 and 9 the tabs 24 are shaped not like a triangle but like a right-angled trapezium.

When the split bush 15 is in the axially spaced position away from the threaded cylindrical member 5 (Figure 1), the end "T₁" of the hose "T" simply rests against the tabs 24. The pushing action of the bush 15 forces the end "T₁" of the hose "T", thus deforming it, between the engagement portion 25 of each tab 24 and the outside surface 4a of the tubular element 4 (Figures 2-9). Advantageously, as shown in the accompanying drawings, the engagement portions 25 converging on the longitudinal axis "X" permit the deformation of hoses "T" that differ in thickness "S". The longitudinal deformation of the hose T is the same as the longitudinal deformation of the seal 18, as in the embodiments illustrated in Figures 2 to 7. In the embodiment illustrated in Figures 8 and 9, on the other hand, the longitudinal deformation of the hose T is a function of the penetration of the ring 19 into the seal 18.

In the embodiment illustrated in Figures 8 and 9, the trapezoidal tab 24 can also come into contact with thin hoses (which are also those that are more difficult to deform) at a predetermined distance from the end annular engagement portion 20 of the threaded cylindrical member 5. This predetermined distance must be sufficient to allow the hose to be further inserted into the member 5 when the ring nut is screwed on in such a way as to push the ring 19 into the seal 18.

In use, with reference only to Figures 1, 2 and 3 for the sake of simplicity, with the ring 10 spaced from the connecting member 2 and without removing the device 1, the end "T₁" of the hose "T" is inserted through the opening 13 in the ring nut 10, through the split bush 15 and through the seal 18 and, without being forced, can be slid over the smooth tubular element 4 until it abuts against the tabs 24 (Figure 1).

Next, the ring nut 10 is screwed onto the connecting member 2 and causes the split bush 15 to close around the hose "T". Continuing to screw on the ring nut 10 causes the split bush 15 and the hose "T" now attached to it to advance further towards the end surface 8 of the seat 7 until the end of the hose "T" is caught and deformed under the tabs 24. At the same time, the bush 15. compresses and deforms the seal 18 causing it to adhere to the hose "T" itself (Figure 2).

If the wall of the hose "T" is thin (Figure 3), equal grip and tightness are guaranteed by the fact that the ring nut 10 and the split bush 15 can be advanced further towards the connecting member 5 and by the fact that the split bush 15 and the seal 18 can be closed further in around the hose "T".

The operating principle described above is the same in the first and second alternative embodiments illustrated in Figures 4 and 5 and in Figures 6 and 7, respectively.

The present invention achieves the above mentioned aims and brings important advantages.

First and foremost, the device according to the invention makes it possible to connect hoses that convey fluids under pressure and guarantees tightness at a pressure as high as 16 BAR.

Further, the device according to the invention will accept flexible hoses of different sizes, that is to say, hoses with the same inside diameter but different thickness and therefore different outside diameters.

The device also guarantees a tight connection between hoses with irregular outside surfaces.

Lastly, the device according to the invention is easy to fit and remove.

## Claims

1. A device for connecting flexible hoses comprising:
a connecting member (2) having a radially internal tubular element (4) that can be inserted into a flexible hose (T) and a radially external threaded cylindrical member (5), the tubular element (4) and the threaded cylindrical member (5) together delimiting an annular seat (7) designed to accommodate an end (T₁) of the flexible hose (T);
a threaded ring nut (10) that can be screwed onto the threaded cylindrical member (5);
a bush (15) positioned radially inside the ring nut (10) and having a working surface (16) engaged with a corresponding working surface (14) of the ring nut (10);
a seal (18) placed around the tubular element (4) and interposed between the threaded cylindrical member (5) and the split bush (15);
the bush 15, the seal (18) and the tubular element (4) together delimiting an annular passage for inserting the end (T₁) of the flexible hose (T) into the annular seat (7);
the bush (15) being movable by turning the ring nut (10) between a position where it is axially spaced from the threaded cylindrical member (5) and a position where it is axially close to the threaded cylindrical member (5) whose seal (18) is pushed by the bush (15) to adopt a radially inwardly deformed condition such as to tighten it around the flexible hose (T);
**characterized in that** the bush (15) is split and **in that** the device further comprises a seal packing ring (19) interposed between the split bush (15) and the seal (18) and generated by revolving about a longitudinal axis (X) of the device (1) a surface that does not intersect the axis (X) itself and that has a wedge-shaped radial section, the seal (18) being shaped to partially accommodate the seal packing ring (19), the seal packing ring (19) exerting an inward radial thrust and an outward radial thrust on the seal (18).

2. The device according to claim 1, wherein the annular seat (7) is delimited by an inside surface (5a) of the threaded cylindrical member (5), by an outside surface (4a) of the tubular element (4) and by an end surface (8) transversal to the longitudinal axis (X) of the device (1); spacer means (23) being located in the annular seat (7) in order to keep the end (T₁) of the flexible hose (T) spaced from the end surface (8) at least when the split bush (15) is in the axially spaced position away from the threaded cylindrical member (5).

3. The device according to claim 2, wherein the spacer means (23) comprise a plurality of tabs (24) having respective engagement portions (25) that converge on the longitudinal axis (X) towards the end surface (8).

4. The device according to claim 3, wherein each of the tabs (24) extends between the end surface (8) of the annular seat (7) and the inside surface (5a) of the threaded cylindrical member (5).

5. The device according to claim 3, wherein each of the tabs (24) extends in a plane containing the longitudinal axis (X) of the device (1).

6. The device according to any of the foregoing claims, wherein the annular seat (7) has a radial thickness (s) which is between 1.5mem and 10mm.

7. The device according to any of the foregoing claims, wherein the seal packing ring (19) is placed around the tubular element (4), the split bush (15), the seal packing ring (19) and the seal (18) delimiting, with the tubular element (4), an annular passage for inserting the end (T₁) of the flexible hose (T) into the annular seat, the split bush (15) thus acting on the seal packing ring (19) and deforming the seal (18).

8. The device according to any of the foregoing claims, 1 wherein the contact surfaces (21) between the ring and the seal (18) define, in a radial section, converging lines whose extensions intersect with the longitudinal axis (X).

9. The device according to any of the foregoing claims, wherein a radial section (18a) of the seal (18) is C-shaped.

10. The device according to any of the foregoing claims, wherein the threaded cylindrical member (5) has a portion (20) that engages the seal (18) and is perpendicular to the longitudinal axis (X) of the device (1).

11. The device according to any of the foregoing claims, wherein the threaded cylindrical member (5) has a portion (20) that engages the seal (18) and converges on the longitudinal axis (X) of the device (1) away from the split bush (15) in such a way as to push the seal (18) inwards when the bush (15) is moved towards the close-up position.

12. The device according to any of the foregoing claims, wherein the seal (18) has a predeformed shape towards the longitudinal axis (X) of the device (1).

13. The device according to any of the foregoing claims, wherein the split bush (15) has barbed teeth (17) on a portion of it that can be associated with the flexible hose (T).

14. The device according to any of the foregoing claims, wherein the tubular element (4) has a smooth outside surface (4a).

15. The device according to any of the foregoing claims, wherein the seal (18) is attached to the threaded cylindrical member (5).

16. The device according to any of the foregoing claims, wherein the seal (18) is co-moulded with the threaded cylindrical member (5).

17. The device according to any of the foregoing claims, wherein the seal (18) has a plurality of annular barbs (18b) located on a radially inside portion of the seal (18) itself designed to come into contact with the hose (T).

## Patentansprüche

1. Vorrichtung zur Verbindung flexibler Schläuche, enthaltend:
- ein Verbindungsstück (2) mit einem radial internen rohrförmigen Element (4), das in einen flexiblen Schlauch (T) eingesetzt werden kann, und ein radial äusseres zylindrisches Gewindestück (5), wobei das rohrförmige Element (4) und das zylindrische Gewindestück (5) zusammen einen ringförmigen Sitz (7) beschreiben, dazu bestimmt, eine Ende (T₁) des flexiblen Schlauches (T) aufzunehmen;
- eine Gewinderingmutter (10), die auf das zylindrische Gewindestück (5) aufgeschraubt werden kann;
- eine Buchse (15), positioniert radial innerhalb der Ringmutter (10) und eine Wirkungsfläche (16) aufweisend, die mit einer entsprechenden Wirkungsfläche (14) der Ringmutter (10) im Eingriff ist;
- eine rund um das rohrförmige Element (4) angeordnete Dichtung (18) und eingesetzt zwischen dem zylindrischen Gewindestück (5) und der Spaltbuchse (15);
wobei die Buchse (15), die Dichtung (18) und das rohrförmige Element (4) zusammen einen ringförmigen Durchlass zum Einsetzen des Endes (T₁) des flexiblen Schlauches (T) in den ringförmigen Sitz (7) beschreiben;
wobei die Buchse (15) beweglich ist durch das Drehen der Ringmutter (10) zwischen einer Position, in welcher sie axial abstehend ist von dem zylindrischen Gewindestück (5), und einer Position, in welcher sie axial dicht an dem zylindrischen Gewindestück (5) liegt und die Dichtung (18) durch die Buchse (15) gedrückt wird, um einen radial nach innen verformten Zustand anzunehmen, so dass sie rund um den flexiblen Schlauch (T) abdichtend abschliesst;
**dadurch gekennzeichnet, dass** die Buchse (15) gespalten ist, und dadurch, dass die Vorrichtung ausserdem einen Dichtungsdruckring (19) enthält, eingesetzt zwischen der Spaltbuchse (15) und der Dichtung (18) und erzeugt durch das Drehen um eine Längsachse (X) der Vorrichtung (1) einer Oberfläche, die nicht die Achse (X) selbst schneidet und die einen keilförmigen radialen Schnitt aufweist, wobei die Dichtung (18) geformt ist, um teilweise den Dichtungsdruckring (19) aufzunehmen, und wobei der Dichtungsdruckring (19) einen nach innen gerichteten radialen Druck und einen nach aussen gerichteten radialen Druck auf die Dichtung (18) ausübt.

2. Vorrichtung nach Patentanspruch 1, bei welcher der ringförmige Sitz (7) beschrieben ist durch eine innere Oberfläche (5a) des zylindrischen Gewindestückes (5), durch eine äussere Oberfläche (4a) des rohrförmigen Elementes (4) und durch eine Endfläche (8) quer zu der Längsachse (X) der Vorrichtung (1); wobei Abstandsmittel (23) in dem rohrförmigen Sitz (7) angeordnet sind, um das Ende (T₁) des flexiblen Schlauches (T) von der Endfläche (8) abstehend zu halten, wenigstens wenn sich die Spaltbuchse (15) in der axial von dem zylindrischen Gewindestück (5) abstehenden Position befindet.

3. Vorrichtung nach Patentanspruch 2, bei welcher die Abstandsmittel (23) eine Anzahl von Flügeln (24) enthalten, und zwar jeweils mit Eingriffsabschnitten (25), die zu der Längsachse (X) hin in Richtung der Endfläche (8) konvergieren.

4. Vorrichtung nach Patentanspruch 3, bei welcher sich ein jeder der Flügel (24) zwischen der Endfläche (8) des ringförmigen Sitzes (7) und der inneren Oberfläche (5a) des zylindrischen Gewindestückes (5) erstreckt.

5. Vorrichtung nach Patentanspruch 3, bei welcher sich jeder der Flügel (24) in einer Ebene erstreckt, welche die Längsachse (X) der Vorrichtung (1) beinhaltet.

6. Vorrichtung nach einem jeden der vorstehenden Patentansprüche, bei welcher der ringförmige Sitz (7) eine radiale Dicke (s) hat, die zwischen 1,5 mm und 10 mm liegt.

7. Vorrichtung nach einem jeden der vorstehenden Patentansprüche, bei welcher der Dichtungsdruckring (19) rund um das rohrförmige Element (4) angeordnet ist, wobei die Spaltbuchse (15), der Dichtungsdruckring (19) und die Dichtung (18) zusammen mit dem rohrförmigen Element (4) einen ringförmigen Durchlass zum Einsetzen des Endes (T₁) des flexiblen Schlauches (T) in den ringförmigen Sitz (7) beschreiben, und wobei die Spaltbuchse (15) folglich auf den Dichtungsdruckring (19) wirkt und die Dichtung (18) verformt.

8. Vorrichtung nach einem jeden der vorstehenden Patentansprüche, bei welcher die Kontaktflächen (21) zwischen dem Ring und der Dichtung (18) in einem radialen Schnitt konvergierende Linien beschreiben, deren Ausdehnungen sich mit der Längsachse (X) schneiden.

9. Vorrichtung nach einem jeden der vorstehenden Patentansprüche, bei welcher ein radialer Schnitt (18a) der Dichtung (18) C-förmig ist.

10. Vorrichtung nach einem jeden der vorstehenden Patentansprüche, bei welcher das zylindrische Gewindestück (5) einen Abschnitt (20) aufweist, der die Dichtung (18) greift und lotrecht zu der Längsachse (X) der Vorrichtung (1) verläuft.

11. Vorrichtung nach einem jeden der vorstehenden Patentansprüche, bei welcher das zylindrische Gewindestück (5) einen Abschnitt (20) aufweist, der die Dichtung (18) greift und zu der Längsachse (X) der Vorrichtung (1) konvergiert, und zwar fort von der Spaltbuchse (15) und auf solche Weise, dass er die Dichtung (18) nach innen drückt, wenn die Buchse (15) zu ihrer Schliessposition hin bewegt wird.

12. Vorrichtung nach einem jeden der vorstehenden Patentansprüche, bei welcher die Dichtung (18) eine vorgeformte Ausführung in Richtung der Längsachse (X) der Vorrichtung (1) hat.

13. Vorrichtung nach einem jeden der vorstehenden Patentansprüche, bei welcher die Spaltbuchse (15) Widerhakenzähne (17) an einem ihrem Abschnitt aufweist, die dem flexiblen Schlauch (T) zugeordnet werden können.

14. Vorrichtung nach einem jeden der vorstehenden Patentansprüche, bei welcher das rohrförmige Element (4) eine glatte äussere Oberfläche (4a) hat.

15. Vorrichtung nach einem jeden der vorstehenden Patentansprüche, bei welcher die Dichtung (18) an dem zylindrischen Gewindestück (5) befestigt ist.

16. Vorrichtung nach einem jeden der vorstehenden Patentansprüche, bei welcher die Dichtung (18) zusammen mit dem zylindrischen Gewindestück (5) geformt ist.

17. Vorrichtung nach einem jeden der vorstehenden Patentansprüche, bei welcher die Dichtung (18) eine Anzahl von ringförmigen Widerhaken (18b) aufweist, angeordnet an einem radialen inneren Abschnitt der Dichtung (18) selbst und bestimmt, mit dem Schlauch (T) Kontakt zu haben.

## Revendications

1. Dispositif permettant de connecter des tuyaux souples, comprenant:
- un élément de connexion (2) pourvu d'un élément tubulaire radialement interne (4) pouvant être inséré dans un tuyau souple (T) et un élément cylindrique fileté radialement externe (5), l'élément tubulaire (4) et l'élément cylindrique fileté (5) délimitant ensemble un logement annulaire (7) conçu pour accueillir une extrémité (T₁) du tuyau souple (T);
- une bague de serrage filetée (10) pouvant être vissée sur l'élément cylindrique fileté;
- une douille (15) positionnée radialement à l'intérieur de la bague de serrage (10) est ayant une surface active (16) engagée avec une correspondante surface active (14) de la bague de serrage (10);
- un joint (18) placé autour de l'élément tubulaire (4) et interposé entre l'élément cylindrique fileté (5) et la douille coupée (15);
la douille (15), le joint (18) et l'élément tubulaire (4) délimitant ensemble un passage annulaire pour l'insertion de l'extrémité (T1) du tuyau souple (T) dans le logement annulaire (7);
la douille (15) étant mobile en pivotant la bague de serrage (10) entre une position dans laquelle elle est axialement espacée de l'élément cylindrique fileté (5) et une position dans laquelle elle est axialement proche de l'élément cylindrique fileté (5) et dans laquelle le joint (18) est poussé par la douille (15) pour adopter une condition radialement déformée vers l'intérieur de manière à le serrer autour du tuyau souple (T);
**caractérisé en ce que** la douille (15) est coupée et **en ce que** le dispositif comprend de plus un anneau presse-joint (19) interposé entre la douille coupée (15) et le joint (18) et généré en faisant effectuer une révolution autour de l'axe longitudinal (X) du dispositif (1) à une surface qui ne croise pas l'axe (X) lui-même et présentant une section radiale en forme de coin, le joint (18) étant formé pour accueillir partiellement l'anneau presse-joint (19), l'anneau presse-joint (19) exerçant une poussée radiale vers l'intérieur et une poussée radiale vers l'extérieur sur le joint (18).

2. Dispositif selon la revendication 1, dans lequel le logement annulaire (7) est délimité par une surface interne (5a) de l'élément cylindrique fileté (5), par une surface externe (4a) de l'élément tubulaire (4) et par une surface d'extrémité (8) transversale à l'axe longitudinal (X) du dispositif (1); des moyens écarteurs (23) étant situés dans le logement annulaire (7) de manière à maintenir l'extrémité (T1) du tuyau souple (T) espacée de la surface d'extrémité (8) au moins lorsque la douille coupée (15) se trouve dans la position axialement éloignée de l'élément cylindrique fileté (5).

3. Dispositif selon la revendication 2, dans lequel les moyens écarteurs (23) comprennent une pluralité d'ailettes (24) pourvues de respectives portions d'engagement (25) qui convergent vers l'axe longitudinal (X) en rapprochement de la surface d'extrémité (8).

4. Dispositif selon la revendication 3, dans lequel chacune des ailettes (24) s'étend entre la surface d'extrémité (8) du logement annulaire (7) et la surface interne (5a) de l'élément cylindrique fileté (5).

5. Dispositif selon la revendication 3, dans lequel chacune des ailettes (24) s'étend dans un plan contenant l'axe longitudinal (X) du dispositif (1).

6. Dispositif selon l'une quelconque des revendications précédentes, dans lequel le logement annulaire (7) présente une épaisseur radiale (s) se situant entre 1,5 et 10,0 mm.

7. Dispositif selon l'une quelconque des revendications précédentes, dans lequel l'anneau presse-joint (19) est placé autour de l'élément tubulaire (4), la douille coupée (15), l'anneau presse-joint (19) et le joint (18) délimitant, avec l'élément tubulaire (4), un passage annulaire pour l'insertion de l'extrémité (T₁) du tuyau souple (T) dans le logement annulaire, la douille coupée (15) agissant ainsi sur l'anneau presse-joint (19) et déformant le joint (18).

8. Dispositif selon l'une quelconque des revendications précédentes, dans lequel les surfaces de contact (21) entre l'anneau et le joint (18) définissent, en section radiale, des lignes convergentes dont les extensions croisent l'axe longitudinal (X).

9. Dispositif selon l'une quelconque des revendications précédentes, dans lequel une section radiale (18a) du joint (18) a une forme de C.

10. Dispositif selon l'une quelconque des revendications précédentes, dans lequel l'élément cylindrique fileté (5) présente une portion (20) qui engage le joint (18) et est perpendiculaire à l'axe longitudinal (X) du dispositif (1).

11. Dispositif selon l'une quelconque des revendications précédentes, dans lequel l'élément cylindrique fileté (5) présente une portion (20) qui engage le joint (18) et converge vers l'axe longitudinal (X) du dispositif (1) en s'éloignant de la douille coupée (15) de manière à pousser le joint (18) vers l'intérieur lorsque la douille (15) est déplacée vers la position de rapprochement.

12. Dispositif selon l'une quelconque des revendications précédentes, dans lequel le joint (18) a une forme prédéformée vers l'axe longitudinal (X) du dispositif (1).

13. Dispositif selon l'une quelconque des revendications précédentes, dans lequel la douille coupée (15) présente des dents à crampon (17) sur une de ses portions pouvant être associées au tuyau souple (T).

14. Dispositif selon l'une quelconque des revendications précédentes, dans lequel l'élément tubulaire (4) présente une surface externe lisse (4a).

15. Dispositif selon l'une quelconque des revendications précédentes, dans lequel le joint (18) est lié à l'élément cylindrique fileté (5).

16. Dispositif selon l'une quelconque des revendications précédentes, dans lequel le joint (18) est obtenu par comoulage avec l'élément cylindrique fileté (5).

17. Dispositif selon l'une quelconque des revendications précédentes, dans lequel le joint (18) présente une pluralité de saillie annulaires (18b) situées sur une portion radialement interne du joint (18) lui-même conçu pour entrer en contact avec le tuyau (T).
